# DEMANDE DE BREVET EUROPEEN

(11) **EP 2 671 785 A1**
(43) Date de publication de la demande: **11.12.2013**
(21) Numéro de dépôt: 13170689.7
(22) Date de dépôt: 05.06.2013
(51) Int. Cl.: B62D 53/00, B62D 57/024, B62D 63/02

(54) **Robot tout-terrain motorisé à au moins quatre roues**

(30) Priorité: 08.06.2012 FR 1255392
(71) Demandeur: Duchesne, Pierre-Yves, 77420 Champs-Sur-Marne (FR)
(72) Inventeur: Duchesne, Pierre-Yves, 77420 Champs-Sur-Marne (FR)
(74) Mandataire: Pontet Allano & Associes

(57) **Abrégé**

La présente invention concerne un robot tout-terrain (1) motorisé et comprenant au moins quatre roues (2).

Le robot (1) comprend :
- deux éléments de châssis (4), reliés entre eux par des moyens de liaison (5) définissant un axe principal de pivotement (6) entre les deux éléments (4) ;
- chaque élément de châssis (4) est muni d'au moins deux roues motrices (2), situées à distance de l'axe de pivotement (6), et chacune rotative autour d'un axe (41) transverse à l'axe principal de pivotement (6) ; et
- la surface de roulement des roues (2) est aimantée.

## Description

### Domaine technique

La présente invention concerne un robot tout-terrain, utilisé généralement comme robot d'inspection et le cas échéant d'intervention. De tels robots peuvent être utilisés dans de nombreux domaines, par exemple pour inspecter l'état d'un ouvrage de construction tel qu'un pont. Ces robots peuvent par exemple porter une caméra ainsi que tout type de dispositif d'intervention.

Le domaine de l'invention est plus particulièrement mais de manière non limitative celui des robots portatifs tout terrain.

### Etat de la technique antérieure

On connaît dans l'art antérieur différents types de robots dits tout-terrain.

On connaît par exemple le robot dit HyQ pour « Hydrolic Quadruped », mis au point par l'ITT (Italian Institute of Technology). Il s'agit d'un robot se déplaçant sur quatre pattes métalliques. L'utilisation de vérins hydrauliques et deux vérins électriques offre à ce robot une grande flexibilité, mais rendent également sa fabrication particulièrement compliquée et donc onéreuse.

On connaît également des robots tout-terrains de conception plus simple, par exemple se déplaçant sur quatre roues motrices reliées à un support rigide. Il s'agit par exemple du robot jouet dit « Robot tout-terrain à 4 roues motrices WiFi SuperDroids ». Si un tel robot est particulièrement simple à mettre en oeuvre, il présente néanmoins l'inconvénient d'être peu manoeuvrable sur certains types de terrains. En particulier, un tel robot est incapable, partant d'une surface horizontale, de gagner une surface verticale et de s'y déplacer.

Un objectif de la présente invention est donc de proposer un robot tout-terrain qui soit particulièrement simple à réaliser.

Un autre objectif de la présente invention est de proposer un robot tout-terrain présentant des capacités d'adaptabilité au terrain améliorées.

Un autre objectif de la présente invention est de proposer un robot tout-terrain facile à piloter à distance.

### Exposé de l'invention

Cet objectif est atteint avec un robot tout-terrain motorisé et comprenant au moins quatre roues motrices indépendantes.

Le robot selon l'invention comprend :
- deux éléments de châssis, reliés entre eux par des moyens de liaison physique définissant un axe principal de pivotement entre les deux éléments ;
- chaque élément de châssis est muni d'au moins deux roues motrices, situées à distance de l'axe principal de pivotement, et chacune rotative autour d'un axe transverse à l'axe principal de pivotement ; et
- la surface de roulement des roues est aimantée.

Les moyens de liaison définissant un axe principal de pivotement entre les deux éléments de châssis permettent à ces deux éléments de s'écarter et de se rapprocher l'un de l'autre. Ils offrent donc une grande flexibilité au robot, en particulier une largeur de voie (espacement entre les roues avant ou entre les roues arrières) variable et auto-adaptative. Le robot peut ainsi s'adapter au terrain sur lequel il se déplace. On peut parler de robot à géométrie variable.

Un coefficient de raideur des moyens de liaison est choisi en fonction d'un comportement souhaité pour le robot.

La surface de roulement des roues aimantée permet une excellente garde au sol, lorsque le robot se déplace sur un support métallique. On rappellera qu'un aimant est un dipôle magnétique, dont les pôles sont inséparables. Les roues du robot sont ainsi le plus possible en contact avec un support sur lequel se déplace le robot, quels que soient la forme et le relief de ce support.

En particulier, l'axe principal de pivotement combiné à ladite aimantation permet au robot partant d'une surface horizontale, de gagner une surface verticale métallique et de s'y déplacer.

En outre, l'axe principal de pivotement combiné à ladite aimantation permet au robot de changer de plan vertical.

On réalise donc avec des moyens particulièrement simples (de simples aimants et des moyens de liaison) un robot tout-terrain présentant d'excellentes capacités d'adaptabilité au terrain rencontré.

L'excellente garde au sol du robot selon l'invention rend son pilotage plus aisé.

Les moyens de liaison peuvent autoriser chaque élément de châssis à pivoter en outre autour d'un axe transverse relativement à l'axe principal de pivotement.

Pour chaque élément de châssis, cet axe transverse se trouve avantageusement parallèle au plan d'une grande face de l'élément de châssis.

Ce degré de liberté augmente encore la flexibilité de mouvement du robot selon l'invention, augmentant encore ses capacités d'adaptabilité au sol. En outre, sa garde au sol est maximisée puisqu'on peut avoir soulèvement de l'une des roues tout en maintenant toutes les autres roues au sol, par exemple sur un sol plan et horizontal ou une surface verticale cylindrique.

Selon un premier mode de réalisation avantageux de l'invention, les moyens de liaison sont formés par un élément charnière élastique et souple, comprenant un logement apte à recevoir un élément de rigidification définissant l'axe principal de pivotement.

Cet élément charnière élastique et souple permet d'offrir deux voire trois degrés de liberté en rotation à chaque élément de châssis par rapport à l'autre, de façon particulièrement facile à mettre en oeuvre (on peut utiliser par exemple une charnière élastique et souple en caoutchouc).

Les propriétés élastiques de l'élément charnière permettent d'introduire dans le logement des éléments de rigidification de différents diamètres. Cela offre une grande liberté dans le choix des éléments de rigidification, qui peut alors obéir à toute autre contrainte supplémentaire.

En outre, l'élément de rigidification peut être parfaitement isolé des vibrations à hautes fréquences de la surface.

Grâce au logement apte à recevoir un élément de rigidification, on peut privilégier l'axe principal de pivotement, et rigidifier à loisir la structure du robot selon l'invention. En fonction d'un comportement souhaité du robot, on pourra par exemple choisir un diamètre plus ou moins large pour l'élément de rigidification, pour une élasticité et une raideur données de l'élément charnière élastique et souple.

Avantageusement, ledit logement est traversant, offrant ainsi un accès facilité à l'intérieur du logement. En particulier, le logement peut être traversant de part et d'autre du robot, présentant donc deux ouvertures vers l'extérieur et offrant ainsi un accès facilité à l'intérieur du logement par chacune de ces deux ouvertures. L'élément charnière élastique et souple peut par exemple être tout simplement de forme tubulaire.

L'élément de rigidification peut comprendre au moins un dispositif parmi des moyens d'alimentation en énergie tels qu'une batterie, une caméra, et un distributeur d'aérosol.

Une caméra, couplée à des moyens d'acquisition d'image, permet d'utiliser le robot selon l'invention comme robot d'inspection.

Un distributeur d'aérosol permet par exemple d'utiliser le robot pour marquer à la peinture un endroit spécifique d'une surface inspectée, par exemple pour marquer une fissure sur un ouvrage mécanique qui aurait été identifiée grâce à une caméra située à l'avant du robot.

Ainsi, on met à profit l'élément de rigidification pour réaliser une autre fonction pouvant être nécessaire au fonctionnement du robot telle que l'alimentation en énergie.

On peut ainsi changer l'un des éléments du robot tel qu'une caméra qu'il porte, sans avoir à changer tout le robot. On a donc un robot dont la fonction peut être changée à loisir. On a donc un robot particulièrement économique d'utilisation et flexible à l'usage.

On peut ainsi fixer sur le robot des moyens d'alimentation en énergie tels qu'une batterie, une caméra, ou un distributeur d'aérosol, simplement avec une seule main, même gantée, sans besoin d'outil spécifique.

Le dispositif tel qu'une batterie, une caméra, et un distributeur d'aérosol, puisqu'il fait office d'axe principal de pivotement, ne déséquilibre pas le robot comme il pourrait le faire s'il était placé ailleurs sur le robot. En particulier, on peut placer ledit dispositif sur un axe de symétrie du robot. La charge du robot se trouve dans son axe principal d'articulation, c'est-à-dire orientée selon son axe principal de pivotement.

Cette caractéristique est particulièrement avantageuse dans sa combinaison avec un élément charnière élastique et souple, puisque l'élasticité de l'élément charnière permet une grande souplesse d'utilisation par exemple dans l'interchangeabilité du type de charge utile embarquée.

Selon une variante avantageuse de ce premier mode de réalisation, l'élément charnière présente une résistance à la déformation élastique plus élevée d'un côté que de l'autre, tendant à ramener les deux éléments de châssis vers une position de repos.

De cette façon, le châssis présente une position d'équilibre dans laquelle les deux éléments de châssis sur écartés angulairement l'un de l'autre, la stabilité au sol du robot étant alors garantie. On améliore ainsi la garde au sol du robot selon l'invention.

Cette caractéristique est particulièrement avantageuse dans sa combinaison avec un élément charnière élastique et souple. Ainsi, lorsqu'on place un élément de rigidification (formé par exemple par une batterie) dans le logement on a les effets suivants :
- plus l'élément de rigidification est de large diamètre, plus il est lourd ;
   et
- plus l'élément de rigidification est de large diamètre, plus la force élastique tendant à ramener les deux éléments de châssis l'un vers l'autre est forte.

Ainsi, on obtient naturellement une compensation de l'augmentation de la masse appuyant sur les moyens de liaison du robot et tendant à écarter les deux éléments de châssis l'un de l'autre.

Le robot selon l'invention peut être agencé pour que les roues respectives des deux éléments de châssis soient en contact deux à deux, dans une position dite fermée du robot, et pour chaque ensemble de deux roues alors en contact, les polarités magnétiques des deux roues sont opposées.

On peut ainsi pincer un support fin tel qu'un voilage, un filin ou un câble, entre deux roues, attirées l'une par l'autre grâce à leurs polarités opposées. Le robot selon l'invention peut ainsi se déplacer sur n'importe quel support, même le long d'un support sur lequel il ne pourrait pas se déplacer simplement en faisant reposer ses roues dessus. Les polarités opposées des roues assurent une pression de contact suffisante entre deux roues pour permettre l'adhérence au roulage.

Avantageusement, chaque roue est recouverte d'une matière adhérente telle qu'une matière silicone.

On améliore ainsi l'adhérence de chaque roue au support sur lequel elle repose. En particulier, cette adhérence des roues est améliorée même lorsque ce support n'est pas métallique.

On peut utiliser comme matière adhérente un élastomère.

Chaque roue peut présenter une extrémité de forme bombée du côté opposé à l'axe principal de pivotement.

Cela permet d'avoir là encore un contact maximum entre le robot (par l'intermédiaire de ses roues) et la surface sur laquelle il évolue, quel que soit l'angle d'écartement entre les éléments de châssis.

Selon un mode de réalisation avantageux, chaque roue est formée par une succession de rondelles aimantées.

Cet agencement en rondelles successives plutôt que mono-bloc permet d'amortir au mieux les chocs entre le robot et la surface sur laquelle il évolue. Chaque rondelle présente deux pôles d'aimantation, les pôles opposés de deux rondelles consécutives étant orientés l'un vers l'autre.

Les roues peuvent présenter un axe de rotation commun, orthogonal à l'axe principal de pivotement, et pour chaque roue, parallèle à un plan selon lequel s'étend (principalement) l'élément de châssis sur lequel est montée la roue.

La stabilité du robot est ainsi maximisée. Son pilotage peut également être facilité.

De préférence, pour chaque élément de châssis, une roue respective est tangente ou dépasse sur chaque côté de l'élément de châssis transverse à l'axe principal de pivotement, de façon que lorsque le robot repose sur un sol plan horizontal du côté transverse des éléments de châssis, au moins une roue de chaque élément de châssis repose au sol.

Un côté transverse des éléments de châssis se comprend comme étant un côté des éléments de châssis transverse à l'axe principal de pivotement. En d'autres termes, si un élément de châssis est une plaque présentant une longueur et une largeur et que l'axe principal de pivotement correspond à la direction de sa longueur, les côtés transverses sont les deux bords s'étendant selon la largeur. En particulier, chaque roue dépasse par rapport à un angle (ou coin) du châssis.

De cette façon, le robot selon l'invention garde sa motricité même lorsqu'il est dans une position dite « debout », c'est-à-dire lorsqu'il repose sur le côté transverse des éléments de châssis.

Cela permet en particulier au robot de passer d'un plan sensiblement horizontal à un plan sensiblement vertical et métallique, même s'ils ne sont pas jointifs et qu'un espace vide et non métallique les sépare.

Chaque élément de châssis peut recevoir au moins une cellule solaire (on peut également parler de cellule photovoltaïque).

Les cellules photovoltaïques alimentent en énergie des moyens de stockage d'énergie du robot, tels qu'une batterie ou un condensateur.

Ainsi, le robot selon l'invention présente une grande autonomie énergétique, puisque l'énergie nécessaire à son fonctionnement (en particulier l'énergie servant à alimenter en énergie chaque roue motrice) est fournie par le rayonnement solaire ou infrarouge, converti en énergie électrique par une cellule photovoltaïque.

De préférence, les cellules solaires sont situées du côté des éléments de châssis orienté vers le haut lorsque le robot repose sur ses quatre roues sur un plan horizontal.

Les deux éléments de châssis recevant une cellule photovoltaïque et étant généralement inclinés l'un relativement à l'autre, on augmente les instants au cours desquels au moins une cellule photovoltaïque est orientée de façon optimale relativement au rayonnement solaire en conditions extérieures diurnes.

Puisque les deux éléments de châssis sont reliés entre eux par des moyens de liaison définissant un axe principal de pivotement entre les deux éléments, on peut diriger un élément de châssis pour qu'il soit orienté de façon optimale, notamment relativement au rayonnement solaire et/ou comparativement à l'autre élément de châssis.

On peut également prévoir que des cellules solaires soient situées de part et d'autre d'un même élément de châssis, orientées pour l'une au moins vers le haut et pour l'autre au moins vers le bas lorsque le robot repose à plat sur ses quatre roues sur un plan horizontal.

De cette façon, au moins une cellule photovoltaïque est bien orientée relativement au rayonnement solaire direct, quelle que soit la position du robot et même si le robot se retourne par exemple pour avancer sur un support situé en hauteur avec les roues du robot au-dessus des moyens de liaison relativement à la verticale.

Le robot selon l'invention peut comprendre un récepteur radio et des moyens pour être commandé à distance par un émetteur radio.

Le robot selon l'invention peut ainsi être piloté à distance par un utilisateur.

Avantageusement, le robot selon l'invention comprend au moins deux cellule solaires (on parle aussi de cellule photovoltaïque), et des moyens de commande agencés pour piloter le déplacement du robot en fonction d'un flux lumineux spécifique reçu par chaque cellule photovoltaïque.

On peut ainsi piloter le déplacement du robot selon l'invention à distance, en utilisant des moyens d'éclairage tels qu'une lampe torche (en lumière visible ou bien infrarouge).

On peut ainsi piloter le robot selon l'invention à distance, sans utiliser d'ondes radio. Le robot selon l'invention est donc utilisable même dans des endroits où l'utilisation d'ondes radio est interdite (par exemple en milieu hospitalier). Le robot selon l'invention est donc utilisable même dans des endroits où la propagation des ondes radio est empêchée.

Cette caractéristique permet également un déplacement autonome et adaptatif du robot en fonction de conditions lumineuses particulières.

L'invention concerne également une chaîne d'au moins deux robots selon l'invention, dans lesquels les moyens de liaison physique sont formés par un élément charnière élastique et souple, qui comprennent chacun un logement apte à recevoir un élément de rigidification définissant l'axe principal de pivotement. Deux robots voisins de la chaîne sont solidarisés par un élément de rigidification commun s'étendant partiellement dans l'un et l'autre des logements respectifs des deux robots.

On peut ainsi former toute une chaîne de robots selon l'invention articulés les uns relativement aux autres. Grâce à cette configuration en chaîne, un ou plusieurs robots peuvent entraîner les robots suivant dans un déplacement voulu.

Le pilotage de cette chaîne de robot est similaire à celui d'un seul robot mais on augmente ainsi considérablement les capacités de franchissement de l'ensemble ainsi formé.

### Description des figures et modes de réalisation

D'autres avantages et particularités de l'invention apparaîtront à la lecture de la description détaillée de mises en oeuvre et de modes de réalisation nullement limitatifs, et des dessins annexés suivants :
- la figure 1 illustre un premier mode de réalisation de robot selon l'invention, dans une vue en perspective,
- la figure 2 illustre un deuxième mode de réalisation de robot selon l'invention, dans une vue en perspective,
- la figure 3 illustre un troisième mode de réalisation de robot selon l'invention, selon une vue en perspective avec les roues au moins partiellement démontées,
- la figure 4 illustre ce troisième mode de réalisation de robot selon l'invention, selon une vue de face,
- la figure 5 illustre un exemple d'une roue de robot selon l'invention, dans une vue en coupe,
- les figures 6A, 6B et 6C illustrent selon des vues de face le troisième mode de réalisation du robot selon l'invention, dans différentes positions qu'il peut prendre, et
- la figure 7 illustre de façon schématique une chaîne de robots selon l'invention.

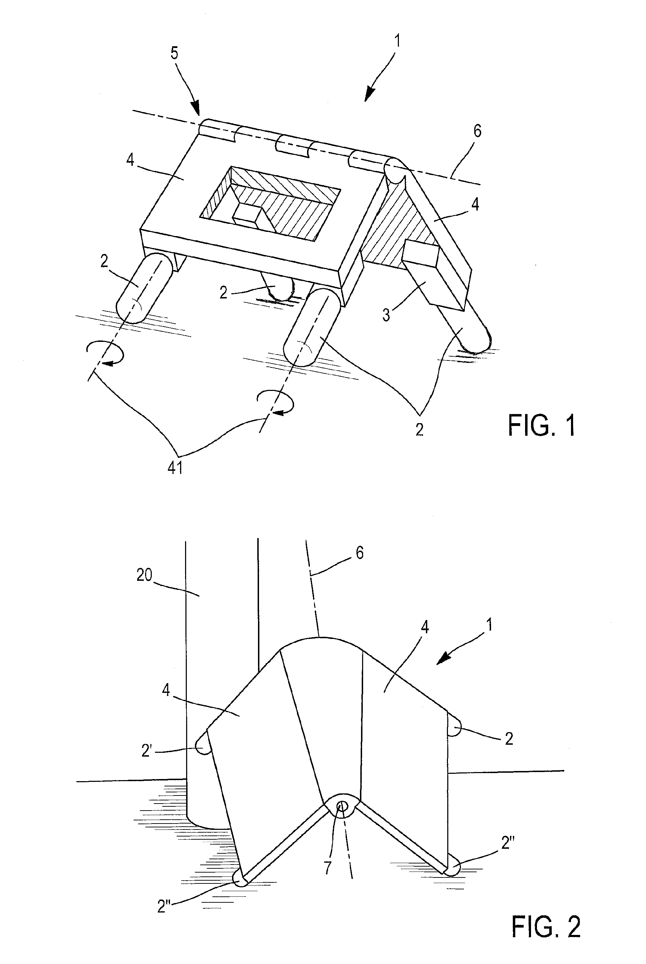

On va tout d'abord décrire, en référence à la figure 1, un premier mode de réalisation de robot 1 selon l'invention.

Le robot selon l'invention présente un châssis formé par deux éléments de châssis 4 reliés ensemble par des moyens de liaison 5 définissant un axe principal de pivotement 6 (représenté en pointillés sur les figures), de manière à ce que les deux éléments puissent s'écarter ou se rapprocher l'un de l'autre.

En fonctionnement, chaque élément de châssis est rigide.

Chaque élément de châssis 4 peut être formé par une plaque rigide, par exemple en métal, en matière synthétique, en bois, etc. La plaque peut être pleine, ou avec une ouverture découpée dans celle-ci, comme représenté à la figure 1. On pourrait également imaginer que l'élément de châssis 4 ne soit pas formé par un matériau rigide, mais formé de façon à pouvoir être rigide dans certaines conditions. Par exemple, l'élément de châssis 4 peut être formé par un matériau gonflable, formant un élément rigide lorsque l'on instaure par gonflage dans celui-ci une pression suffisante.

Les moyens de liaison 5 selon l'invention peuvent être formés, comme représenté à la figure 1, par une charnière qui par nature définit un axe principal de pivotement 6 autour duquel s'articulent les deux éléments de châssis 4. D'autres moyens de réalisation des moyens de liaison selon l'invention seront décrits plus amplement en référence à la figure 2.

Le robot selon l'invention comporte quatre roues 2, chacune reliée à un bloc moteur 3 (comprenant un motoréducteur), et réparties sur chacun des éléments de châssis 4. Chaque roue forme ainsi une roue motrice du robot selon l'invention. Chaque roue est située sur un bord d'un élément de châssis 4 opposé au bord recevant les moyens de liaison 5.

Chaque roue 4 est rotative autour d'un axe de rotation correspondant 41. L'axe de rotation d'une roue est de préférence orthogonal à l'axe principal de pivotement 6. En outre, l'axe de rotation 41 d'une roue 2 peut se trouver parallèle au plan d'une plaque formant élément de châssis 4 et recevant ladite roue 2. On a représenté par des flèche le sens de rotation des roues autour de leur axe de rotation correspondant 41.

Chaque roue 2 du robot selon l'invention offre une surface de roulement aimantée. En d'autres termes, la surface de chaque roue 2 pouvant être en contact avec un support sur lequel se déplace le robot 1 est aimantée. On peut également parler de surface magnétique. Pour des raisons de simplification de la description, on pourra parler dans la suite plus simplement de « roue aimantée », bien que l'invention concerne en réalité une roue présentant une surface de roulement aimantée. L'aimantation de la roue peut être suffisante pour, en s'opposant à la force de pesanteur, maintenir le robot en contact par une seule de ses roues, avec une surface métallique. On peut choisir l'aimantation de chaque roue également en fonction de la masse d'une charge que l'on souhaiterait déplacer à l'aide du robot selon l'invention. Les roues peuvent être formées par un cylindre magnétique (par exemple constitué d'un empilement de plusieurs rondelles magnétiques sensiblement coaxiales) entraîné en rotation selon l'axe de révolution du cylindre. En modifiant les paramètres (diamètre, hauteur notamment) du cylindre, on peut ajuster la force magnétique exercée par celui-ci pour obtenir une valeur souhaitée. En particulier, en modifiant les diamètres respectifs de ces rondelles, leur nombre, les proportions et le profil de empilement, ainsi que la hauteur d'empilement, on peut ajuster la force magnétique exercée par celui-ci pour obtenir une valeur souhaitée.

On voit également dans l'exemple représenté à la figure 1, et bien que cela ne puisse pas être considéré comme limitatif, que les moyens de liaison 5 s'étendent sur toute la longueur des éléments de châssis 4 (ou le sens de la longueur des éléments de châssis correspond à l'axe principal de pivotement 6).

Le robot 1 comprend également un récepteur radio (non représenté), et des moyens (non représentés) pour commander à distance les moteurs 3 qui entraînent les roues 2 en rotation, et ainsi piloter le déplacement du robot 1 selon l'invention. Lesdits moyens de pilotage consistent en des moyens électroniques et/ou informatiques et/ou logiciels. Il s'agit typiquement, d'un microprocesseur et/ou un ordinateur et/ou un circuit électronique numérique ou analogique, de préférence dédié.

Le robot 1 comprend également des moyens d'alimentation en énergie (on développera dans la suite un agencement avantageux de ces moyens tels qu'une batterie). Il s'agit de préférence de moyens rechargeables, le robot pouvant être placé sur un support adapté relié électriquement à une source de courant, pour être rechargé électriquement en quelques secondes.

On va maintenant décrire en référence à la figure 2 un deuxième mode de réalisation de robot 1 selon l'invention.

Le deuxième mode de réalisation ne diffère du premier mode de réalisation que par les moyens de liaison 5. Les moyens de liaison sont ici formés par une bande souple et élastique formant charnière. La bande souple peut être formée par exemple en caoutchouc ou élastomère. On choisit une raideur de cette bande souple en fonction du comportement souhaité pour le robot 1 selon l'invention. L'utilisation d'une bande souple augmente le nombre de degrés de liberté d'un élément de châssis 4 relativement à l'autre. En particulier, la bande souple élastique offre un deuxième degré de liberté formé par une rotation autour d'un axe orthogonal à l'axe principal de pivotement 6 et situé dans le plan de l'élément de châssis 4.

On peut considérer en d'autres termes que :
- le robot 1 selon l'invention comprend deux plaques rigides 4 chacune définie par une longueur, une largeur, et une hauteur qui correspond à la plus petite dimension, et chaque plaque recevant sur un bord longitudinal, au moins deux roues motrices ;
- les plaques sont reliées entre elles, selon leur bord longitudinal opposé à celui recevant les roues, par un élément charnière 5 élastique et souple autorisant pour chaque plaque 4 un mouvement de rotation autour d'un axe orienté selon la direction longitudinale de la plaque (axe principal de pivotement 6), autour d'un axe orienté selon la direction transverse de la plaque.

Si la bande est suffisamment souple, on peut même parler d'une liaison de type « pivot-rotulante », en ce qu'on a trois degrés de liberté en rotation entre les deux éléments de châssis 4 avec une amplitude de mouvement possible plus large pour l'une de ces rotations, celle autour de l'axe principal de pivotement 6. Le troisième degré de liberté est alors la rotation autour d'un axe orienté orthogonalement à la grande surface de l'élément de châssis (grande surface définie par la longueur et la largeur de la plaque rogide).

On voit également à la figure 2 que le deuxième mode de réalisation de robot selon l'invention présente un logement 7, traversant dans l'exemple représentée, orienté selon l'axe principal de pivotement 6. Ce logement 7 reçoit un élément de rigidification (non représenté à la figure 2). L'élément de rigidification permet de privilégier l'axe principal de pivotement 6, en limitant l'amplitude des autres mouvements rendus possibles les moyens de liaison 5 lorsque le logement 7 est vide (rotations ou même translations d'un élément de châssis 4 relativement à l'autre).

De cette façon, le robot 1 peut facilement transporter une charge utile formant élément de rigidification. La charge utile est par exemple une batterie au lithium (ou un condensateur) et une caméra. De préférence, la charge utile présente une forme cylindrique et elle est rigide.

Un tel robot présente le comportement suivant, lorsqu'il se trouve initialement posé sur un sol sensiblement horizontal et sur ses quatre roues, avec un angle compris entre 10° (presque replié) et 180° (ouvert à plat) entre les deux éléments de châssis 4 :
- quand il avance « tout droit », c'est-à-dire dans la direction de l'axe principal de pivotement 6, les deux éléments de châssis 4 tendent à s'écarter ou à se rapprocher l'un de l'autre en fonction de son attitude initiale de départ jusqu'à atteindre une position de repos intermédiaire, dans laquelle la force de pesanteur qui s'exerce sur le robot tendant à augmenter l'angle entre les deux éléments de châssis 4 est compensée par une force de rappel élastique exercée par la bande élastique et souple formant les moyens de liaison 5 ;
- lorsque le robot 1 tourne sur lui-même autour d'un axe vertical l'angle entre les deux éléments de châssis 4 tend à diminuer, sans pour autant que des roues entrent en contact l'une avec l'autre du fait notamment de l'épaisseur de l'élément de liaison 5. On peut ainsi commander et améliorer la garde au sol du robot 1, donc ses capacités à franchir des obstacles sans ajout d'actionneur ni de commande supplémentaire.

Bien sûr, ce comportement est différent, par exemple si l'élément de rigidification présente une forme conique. De façon générale, l'homme du métier saura aisément jouer avec les différents paramètres influant sur le comportement du robot, en vue d'obtenir un comportement spécifique souhaité.

La figure 2 permet d'illustrer un avantage du robot selon l'invention, à savoir sa capacité à changer de plan d'évolution et de travail, pour peu qu'au moins l'un de ces plans de travail soit métallique.

A la figure 2, le robot s'apprête à grimper le long d'un poteau métallique 20. Pour cela, il est dirigé de façon que l'une de ses roues avant entre en contact avec le poteau métallique 20 (où la direction avant est définie relativement au sens de déplacement du robot 1 qui se déplace selon l'axe principal de pivotement 6). Dans la suite, on appelle cette roue « roue d'accroche 2' ».

Puisque cette roue 2' est aimantée, elle reste accrochée au poteau métallique 20. Au moins deux autres roues restent en contact avec le support sur lequel se trouvait initialement le robot (on parle simplement du sol, dans la suite de l'explication). Dans le cas où les moyens de liaisons 5 offrent une deuxième rotation d'un élément de châssis par rapport à l'autre, on peut même avoir dans un premier temps toutes les autres roues qui restent en contact avec le support sur lequel se trouvait initialement le robot (même si ce support est lui aussi métallique).

Les roues qui restent en contact avec le support sur lequel se trouvait initialement le robot permettent d'amorcer la montée de la roue d'accroche 2' sur le poteau métallique 20.

Rapidement, le robot ne va alors plus reposer au sol que sur deux roues dites arrières 2", sur le support sur lequel se trouvait initialement le robot.

Ces deux roues arrières 2", du fait de leur rotation autour de leur axe de rotation 41, vont alors tendre à replier le robot sur lui-même, autour de l'axe d'articulation 6, jusqu'à ce qu'une deuxième roue 2, auparavant « en l'air », vienne en contact elle aussi avec le poteau métallique 20.

Ensuite, le robot va pouvoir monter le long du poteau métallique, avec finalement ses quatre roues en contact avec ledit poteau.

On voit que le robot présente donc une grande souplesse et de bonnes capacités de garde au sol, qui lui permettent par exemple de se déplacer sur un grillage métallique, quand bien même un espacement vide dans une maille du grillage serait plus large que le diamètre d'une roue 2 du robot 1 selon l'invention.

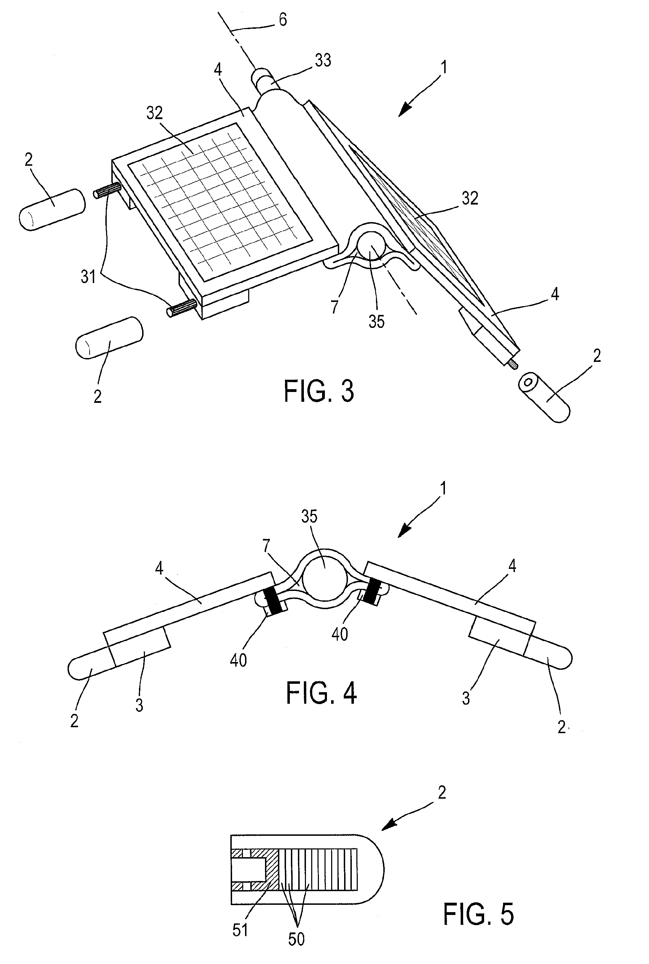

On va maintenant présenter, en référence à la figure 3, un troisième mode de réalisation de robot selon l'invention.

On voit sur la figure 3 que les roues 2 sont amovibles, et peuvent être montées et démontées sans outil, à la main même gantée, en s'emboîtant sur un axe d'entraînement 31.

Dans ce mode de réalisation, chaque élément de châssis 4 reçoit une cellule photovoltaïque, ou panneau solaire 32.

On peut prévoir de solidariser une cellule photovoltaïque à une plaque rigide en noyant l'ensemble dans une résine transparente.

Bien que les cellules photovoltaïque puissent être utilisées uniquement pour alimenter en énergie les moteurs des roues 2, on peut également prévoir que le robot selon l'invention puisse être contrôlé simplement à l'aide de ces cellules photovoltaïques et de moyens de pilotage adaptés formés par exemple par un processeur ou un microprocesseur embarqué sur le robot (et situé de préférence dans son logement 7).

Le principe de pilotage du robot pourrait ainsi être le suivant :
- tourner du côté de la cellule photovoltaïque la plus éclairée ;
- aller tout droit lorsque les deux cellules photovoltaïques sont également éclairées ;
- s'arrêter lorsqu'aucune des deux cellules photovoltaïques n'est éclairée.

Si à la figure 3, seule une face de chaque élément de châssis reçoit des cellules photovoltaïques, on peut également envisager des variantes dans lesquelles les deux faces de plus grande surface de chaque élément de châssis reçoivent des cellules photovoltaïques.

A la figure 3, les moyens de liaison 5 sont formés simplement par une charnière tubulaire élastique et souple, et collée à chacun des éléments de châssis 4 selon une ligne respective parallèle à l'axe principal de pivotement 6. Ces moyens de liaison 5 peuvent être appelés « élastique ». On peut prévoir que l'élastique soit plus précontraint à certains endroits qu'à d'autres. En particulier, cet élastique peut être plus précontraint sous le robot 1, c'est-à-dire du côté orienté vers le sol lorsque le robot repose au sol sur ses quatre roues. La force de rappel exercée par les moyens de liaison élastiques peut être telle qu'elle tend à écarter ou rapprocher les éléments de châssis de façon à tendre en permanence vers une même position intermédiaire de repos.

On voit également à la figure 3 que le robot 1 selon l'invention porte grâce au logement 7 une caméra 33 qui fait saillie hors de ce logement. Un avantage est que la caméra 33 est alors située dans l'axe du robot 1, c'est-à-dire avec son axe optique orienté dans l'axe principal de pivotement 6. En outre, la caméra se trouvant en avant du robot 1 selon l'invention, on peut facilement anticiper les déplacements nécessaires ou utiles pour le robot. On peut pour cela utiliser l'objectif de la caméra faisant saillie hors du logement et pouvant toucher voire même traverser une surface inspectée.

Enfin, puisque la caméra dépasse hors du logement 7, un utilisateur y a facilement accès, par exemple pour régler une distance de focalisation de la caméra, en vissant ou dévissant simplement, à main nue ou même gantée, un objectif de forme cylindrique.

Selon le modèle choisi, le diamètre d'une caméra de forme cylindrique peut par exemple être compris entre 18 mm et 22 mm, ce qui ne posera pas de difficulté puisque le logement 7 est formé dans une charnière tubulaire élastique et souple, la propriété élastique étant alors exploitée.

Le robot reçoit également comme élément de rigidification une batterie 35. La batterie 35 présente la forme d'un cylindre.

On voit également dans le mode de réalisation représenté à la figure 3, que les roues 2 sont agencées sur le robot 1 de façon qu'elles restent en contact avec un support plan si le robot se renverse sur ce support, pour y reposer par son côté transverse à l'axe principal de pivotement. En d'autres termes, les roues 2 sont au moins tangentes à l'extérieur d'un gabarit (forme externe) du robot comprenant les éléments de châssis 4, les moteurs 3 des roues et les moyens de liaison 5. Ainsi, on garde la motricité du robot 1 même s'il est « debout » ou « sur le dos ».

En outre, le robot 1 représenté à la figure 3 présente une symétrie axiale relativement à l'axe principal de pivotement 6.

Cela permet notamment que les roues 2 respectives des deux éléments de châssis 4 se trouvent deux à deux en contact lorsque le robot 1 se trouve dans une position dite « repliée ».

La figure 4 présente un quatrième mode de réalisation de robot 1 selon l'invention, qui diffère du troisième mode de réalisation uniquement par des plaques 40 qui permettent de mettre en oeuvre de façon particulièrement astucieuse les différences de précontraintes énoncées plus haut. Pour chaque élément de châssis 4, une portion des éléments de liaison 5 formés par une bande tubulaire souple et élastique est pincée entre l'élément de châssis 4 et une plaque 40. La plaque 40 présente une face anti-adhérente (lisse) à cette partie pincée de la bande tubulaire. L'élément de châssis 4 présente une face adhérente (plus rugueuse que la face anti-adhérente) à cette partie pincée de la bande tubulaire. De cette façon, on obtient une déformation non uniforme de la bande tubulaire souple et élastique, lorsqu'on fait varier l'angle entre les deux éléments de châssis. On obtient ainsi le résultat recherché, à savoir faire en sorte que la force de rappel exercée par les moyens de liaison tende à écarter ou rapprocher les éléments de châssis 4 de façon à tendre en permanence vers une même position intermédiaire de repos.

La figure 5 présente une vue en coupe d'un exemple particulièrement avantageux de roue 2 selon l'invention. Dans cet exemple, la roue 2 est formée d'une succession de cylindres aimantés 50, et mobiles en translation autour de l'axe de rotation de la roue, de façon à pouvoir absorber l'énergie dégagée par des chocs de la roue 2 sur un obstacle, sans que cela n'endommage le robot 1. Chaque cylindre 50 présente un pôle magnétique nord et un pôle magnétique sud, et les cylindres se suivent avec des pôles opposés se faisant face selon le schéma suivant : (Nord-Sud)- (Nord-Sud) - (Nord-Sud), où les parenthèses symbolisent un cylindre 50. Deux roues prévues pour pouvoir être en contact l'une avec l'autre lorsque le robot est dans une position dite « repliée », présentent de préférence des polarités opposées, même à l'échelle des cylindres 50, où chaque pôle magnétique nord (respectivement sud) d'une rondelle d'une roue fait alors face à un pôle magnétique sud (respectivement nord) d'une rondelle de la roue faisant face. Ainsi, on améliore l'attraction de l'une vers l'autre desdites deux roues 2 avec des polarités opposées, tout en évitant une démagnétisation des rondelles magnétiques pouvant être due à une proximité des roues d'un même élément de châssis 4. En outre, on améliore la force magnétique exercée par chaque roue, ce qui peut permettre d'augmenter la masse maximale d'une charge pouvant être embarquée sur le robot selon l'invention.

Ces rondelles sont reliées à un manchon 51 pour emboîter la roue 2 sur un axe d'entraînement 31 relié au boîtier moteur attribué à la roue 2 sur le robot 1.

L'ensemble est recouvert d'une matière silicone qui améliore les capacités d'adhérence du robot 1 selon l'invention. On peut également utiliser cet enrobage silicone pour réaliser une forme bombée ou hémisphérique à l'extrémité de la roue opposée au manchon 51. Ainsi, la roue présente une forme générale de cylindre dont la hauteur est supérieure au diamètre, avec une extrémité arrondie pour améliorer sa garde au sol et l'adhérence quelle que soit l'inclinaison de ce sol (ou de cette surface) relativement à la roue 2.

On va maintenant présenter des caractéristiques bien particulières et non limitatives d'un exemple de robot selon le quatrième mode de réalisation du robot selon l'invention :
- poids du robot 1 sans aucune charge : 186 grammes ;
- poids d'une caméra pouvant être embarquée : 34 grammes ;
- poids d'une batterie pouvant être embarquée, et du module transmetteur haute fréquence (on parle aussi de module de transmission radio) incluant les moyens de pilotage du robot en fonction de données de commande reçues par ondes radio : 30 grammes
- chaque roue magnétique exerce une force magnétique de même valeur que deux fois la force de pesanteur s'exerçant sur le robot 1 muni de la batterie, le transmetteur et la caméra (500 grammes). On obtient donc un équivalent de 2000 grammes en force magnétique exercée par les quatre roues.
- chaque moteur d'entraînement d'une roue peut entraîner en rotation autour d'un axe vertical deux fois l'équivalent en grammes de la force magnétique exercée par les quatre roues, soient 4000 grammes pour chaque roue. Ainsi, au contact d'une paroi horizontale, plane et lisse, le robot à quatre roues (pesant 250 grammes une fois chargé) peut tracter quatre fois 4000 grammes soient 16000 grammes.
- Les moyens de liaison sont formés par une bande souple élastique en caoutchouc, ou silicone, ou PVC (polychlorure de vinyle), ou PE (polyéthylène), etc.

Le robot 1 présente des dimensions réduites. Par exemple il peut, en position repliée, présenter des dimensions inférieures à 10x5x4 cm. Il forme ainsi un robot léger, portatif et facile à ranger dans une poche. Néanmoins, on pourra envisager n'importe quelles dimensions pour le robot 1 selon l'invention.

Le poids et/ou la puissance des moteurs 3 peuvent par exemple permettre au robot d'actionner une poignée de porte, un interrupteur etc.

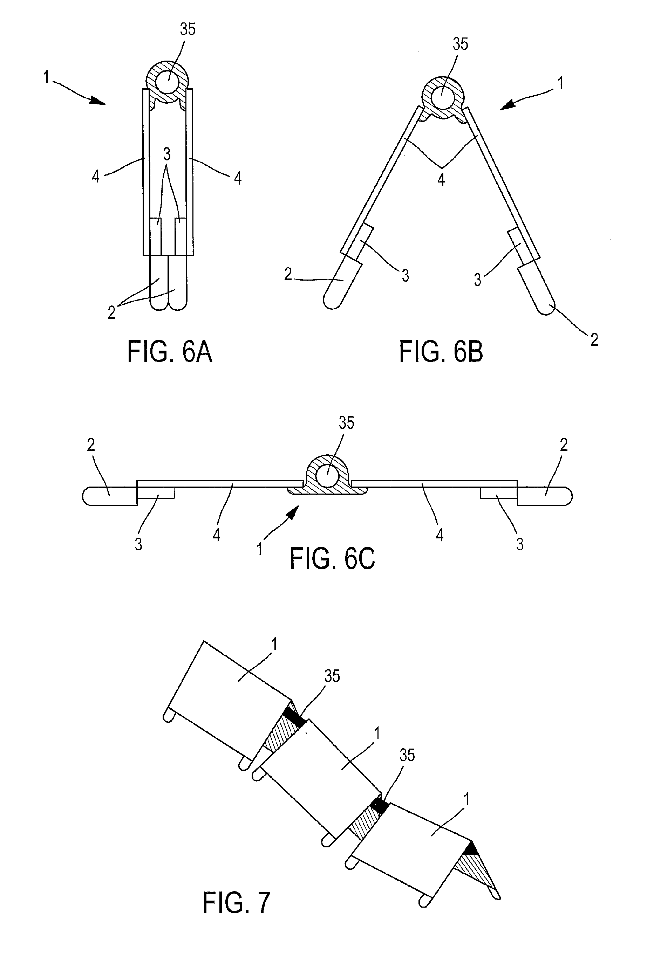

Les figures 6A, 6B et 6C illustrent respectivement :
- le robot 1 selon l'invention dans une position dite « repliée », dans laquelle les roues de deux éléments de châssis 4 sont deux à deux en contact ;
- le robot 1 selon l'invention dans une position dite « de travail », dans laquelle les deux éléments de châssis forment entre eux un angle de l'ordre de 90° ; et
- le robot 1 selon l'invention dans une position dite « dépliée », dans laquelle les deux éléments de châssis forment entre eux un angle de l'ordre de 180°.

Ces exemples ne sont pas limitatifs, le robot 1 pouvant prendre toutes sortes de positions. En particulier, lorsqu'il se déplace sur une surface incurvée (par exemple à l'intérieur d'un tuyau), les deux éléments de châssis 4 peuvent former entre eux un angle supérieur à 180°, par exemple 220° (l'angle est mesuré du côté du support sur lequel les roues reposent).

La figure 7 illustre une utilisation particulière d'au moins deux robots selon l'invention. On peut envisager de relier entre eux deux robots au moins, simplement en les connectant mécaniquement et électriquement par broches conductrices situées près des ouvertures 7 traversantes. De cette façon, seul le pilotage d'un robot dit « éclaireur » est important, les autres robots pouvant le cas échéant être commandés par le robot éclaireur. On construit ainsi un agencement « en chenille ». On augmente ainsi une charge totale pouvant être embarquée ou trainée par l'ensemble. En outre, l'agencement de plusieurs robot présente une grande souplesse, chaque robot étant libre de se déplacer relativement au robot voisin, dans la limite de ce qui est rendu possible par la connexion qui les relie.

On peut également prévoir un agencement des robots entre eux qui ne soit pas seulement linéaire, mais réticulé (sous la forme d'une toile, où chaque branche de la toile comprend elle-même au moins deux robots selon l'invention).

Avantageusement, les robots reliés entre eux peuvent communiquer entre eux.

A la figure 7, on voit que les robots 1 ne sont pas reliés entre eux simplement par une connexion, mais plus astucieusement, à l'aide d'un élément batterie cylindrique placé à cheval dans les logements 7 traversants de deux robots voisins. Les robots forment ainsi une chaîne de robots selon l'invention.

Bien sûr, l'invention n'est pas limitée aux exemples qui viennent d'être décrits et de nombreux aménagements peuvent être apportés à ces exemples sans sortir du cadre de l'invention.

On pourrait par exemple prévoir que les moyens de liaison soient formés par une gaine creuse et souple, pouvant être remplie de gaz ou de liquide jusqu'à ce qu'elle présente une raideur recherchée.

On pourrait également prévoir de réaliser le robot sous la forme d'une pochette dans laquelle deux battants rigides forment les éléments de châssis et une tranche par exemple textile forme les moyens de liaison, les roues pouvant être sorties de la pochette lorsqu'on souhaite utiliser la pochette en tant que robot selon l'invention.

Le robot pourrait présenter plus de quatre roues, notamment plus de quatre roues motrices.

Chaque élément de châssis muni de roues motorisées pourrait présenter une symétrie planaire relativement à un plan de l'élément de châssis (en particulier le plan selon lequel s'étend principalement l'élément de châssis). En particulier, on peut imaginer une réalisation « en sandwich » dans laquelle les moteurs de chaque roue de l'élément de châssis sont pincés entre deux plaques identiques et recevant chacune au moins une cellule solaire. Chaque ensemble de deux plaques identiques pinçant les moteurs de roue forme un élément de châssis selon l'invention. De cette façon, le robot selon l'invention peut être retourné sans aucune incidence sur son fonctionnement.

En particulier toutes les caractéristiques, formes, variantes et modes de réalisation décrits précédemment sont combinables entre eux selon diverses combinaisons dans la mesure où ils ne sont pas incompatibles ou exclusifs les uns des autres.

Ces modes de réalisation étant nullement limitatifs, on pourra notamment imaginer des variantes de l'invention ne comprenant qu'une sélection de caractéristiques décrites, par la suite isolées des autres caractéristiques décrites (même si cette sélection est isolée au sein d'une phrase comprenant ces autres caractéristiques), si cette sélection de caractéristiques est suffisante pour conférer un avantage technique ou pour différencier l'invention par rapport à de l'état de la technique antérieur. Cette sélection comprend au moins une caractéristique, de préférence fonctionnelle, sans détails structurels, ou avec seulement une partie des détails structurels si cette partie uniquement est suffisante pour conférer un avantage technique ou pour différencier l'invention par rapport à l'état de la technique antérieur.

## Revendications

1. Robot tout-terrain (1) motorisé et comprenant au moins quatre roues motrices (2) indépendantes, **caractérisé en ce qu'il** comprend :
- deux éléments de châssis (4), reliés entre eux par des moyens de liaison (5) physique définissant un axe principal de pivotement (6) entre les deux éléments (4) ;
- chaque élément de châssis (4) est muni d'au moins deux roues motrices (2), situées à distance de l'axe principal de pivotement (6), et chacune rotative autour d'un axe (41) transverse à l'axe principal de pivotement (6) ; et
- la surface de roulement des roues (2) est aimantée.

2. Robot (1) selon la revendication 1, **caractérisé en ce que** les moyens de liaison (5) autorisent chaque élément de châssis (4) à pivoter en outre autour d'un axe transverse relativement à l'axe principal de pivotement (6).

3. Robot (1) selon la revendication 1 ou 2, **caractérisé en ce que** les moyens de liaison (5) sont formés par un élément charnière élastique et souple, comprenant un logement (7) apte à recevoir un élément de rigidification définissant l'axe principal de pivotement (6).

4. Robot (1) selon la revendication 3, **caractérisé en ce que** l'élément de rigidification comprend au moins un dispositif parmi des moyens d'alimentation en énergie tels qu'une batterie (35) , une caméra (33), et un distributeur d'aérosol.

5. Robot (1) selon la revendication 3 ou 4, **caractérisé en ce que** l'élément charnière présente une résistance à la déformation élastique plus élevée d'un côté que de l'autre, tendant à ramener les deux éléments de châssis (4) vers une position de repos.

6. Robot (1) selon l'une quelconque des revendications 1 à 5, **caractérisé en ce qu'il** est agencé pour que les roues (2) respectives des deux éléments de châssis (4) soient en contact deux à deux, dans une position dite fermée du robot (1), et **en ce que** pour chaque ensemble de deux roues alors en contact, les polarités magnétiques des deux roues sont opposées.

7. Robot (1) selon l'une quelconque des revendications 1 à 6, **caractérisé en ce que** chaque roue (2) est recouverte d'une matière adhérente telle qu'une matière silicone.

8. Robot (1) selon l'une quelconque des revendications 1 à 7, **caractérisé en ce que** chaque roue (2) présente une extrémité de forme bombée du côté opposé à l'axe principal de pivotement (6).

9. Robot (1) selon l'une quelconque des revendications 1 à 8, **caractérisé en ce que** chaque roue (2) est formée par une succession de rondelles aimantées (50).

10. Robot (1) selon l'une quelconque des revendications 1 à 9, **caractérisé en ce que** les roues (2) présentent un axe de rotation commun, orthogonal à l'axe principal de pivotement (6), et pour chaque roue, parallèle à un plan selon lequel s'étend l'élément de châssis sur lequel est montée la roue.

11. Robot (1) selon l'une quelconque des revendications 1 à 10, **caractérisé en ce que** pour chaque élément de châssis (4), une roue respective (2) est tangente ou dépasse sur chaque côté de l'élément de châssis transverse à l'axe principal de pivotement (6), de façon que lorsque le robot (1) repose sur un sol plan horizontal du côté transverse des éléments de châssis (4), au moins une roue (2) de chaque élément de châssis (4) repose au sol.

12. Robot (1) selon l'une quelconque des revendications 1 à 11, **caractérisé en ce que** chaque élément de châssis (4) reçoit au moins une cellule photovoltaïque (32).

13. Robot (1) selon l'une quelconque des revendications 1 à 12, **caractérisé en ce qu'il** comprend un récepteur radio et des moyens pour être commandé à distance par un émetteur radio.

14. Robot (1) selon l'une quelconque des revendications 1 à 13, **caractérisé en ce qu'il** comprend au moins deux cellule photovoltaïque (32), et des moyens de commande agencés pour piloter le déplacement du robot (1) en fonction d'un flux lumineux spécifique reçu par chaque cellule photovoltaïque (32).

15. Chaîne d'au moins deux robots (1) selon l'une quelconque des revendications 3 à 14, **caractérisé en ce que** deux robots (1) voisins de la chaîne sont solidarisés par un élément de rigidification commun s'étendant partiellement dans l'un et l'autre des logements respectifs (7) des deux robots (1).
